# EUROPEAN PATENT APPLICATION

(11) **EP 0 989 752 A2**
(43) Date of publication of application: **29.03.2000**
(21) Application number: 99307457.4
(22) Date of filing: 21.09.1999
(51) Int. Cl.: H04N 7/18

(54) **Apparatus and method for displaying and distributing video images**

(30) Priority: 22.09.1998 JP 26820498
(71) Applicant: SONY CORPORATION, Tokyo 141 (JP)
(72) Inventor: Shigetomi, Tetsu, Shinagawa-ku, Tokyo (JP)
(74) Representative: Nicholls, Michael John

(57) **Abstract**

The present invention, relating to a video image displaying apparatus, video image displaying method, video image distributing apparatus, and video image distributing method, applicable to the supplying, by arranging a plurality of terminal displaying means for instance on the inner walls of a tunnel, of consecutive articulated still pictures by these terminal video image displaying means to occupants of a vehicle, is intended facilitate the distribution of these video images to individual video image displaying apparatuses in which video images at these video image displaying apparatuses are to be centrally managed and updated. In video image displaying apparatuses for providing occupants of a mobile object with consecutive articulated video images by blinking still pictures, the format of inputted picture data F is converted and supplied to individual terminal displaying means.

## Description

The present invention relates to a video image displaying apparatus, video image displaying method, video image distributing apparatus, and video image distributing method, applicable to the supplying, by arranging a plurality of terminal displaying means for instance on the inner walls of a tunnel, of consecutive articulated still pictures by these video image displaying means to occupants of a vehicle. The invention, in video image displaying apparatuses for providing consecutive articulated still pictures to occupants of a vehicle by blinking still pictures, in which pictures at these video image displaying apparatuses are to be centrally managed and updated, enables these pictures to be easily distributed to the individual video image displaying apparatuses by converting the formats of inputted picture data before supplying them to the individual video image displaying apparatuses.

According to the related art, there have been proposed, as video image displaying systems, video image displaying apparatuses for providing occupants of a vehicle passing a tunnel with consecutive articulated still pictures from outside (the Japanese Published Unexamined Patent Application No. Hei 5-27197, Published Unexamined Patent Application No. Hei 5-40448, Published Unexamined Patent Application No. Hei 5-224617 and so on).

Such a video image displaying apparatus is enabled to provide occupants (meaning not only passengers but also the crew) of a moving vehicle with consecutive articulated still pictures by arranging terminal video image displaying means at prescribed intervals on, for instance, the walls of a tunnel, and causing each video image displaying means to blink frames of still pictures constituting animation.

Incidentally, if a terminal video image displaying means to be applied to the video image displaying apparatus of this kind is configured of a liquid crystal display panel and a stroboscopic tube, the pictures to be provided to the occupants can be easily altered by updating the still pictures displayed on this liquid crystal display panel.

Further, a configuration in which such video image displaying apparatuses are arranged at various points along a route and the pictures to be displayed by these video image displaying apparatus are centrally managed and updated, such video image displaying apparatuses can provide various information in a coordinated manner and resultant convenience.

However, liquid crystal display panels such as VGA (Video Graphics Array), SVGA (Super Video Graphics Array) and XGA (Extended Graphics Array) are diverse in resolution level, and if video image displaying apparatuses are arranged at different points along a route, there may arise a case in which the resolution level of the liquid crystal display panel differs among the video image displaying apparatuses.

In this case, if pictures are provided from the host side centrally managing and updating the pictures for these video image displaying means at different levels of resolution matching the respective video image displaying apparatuses, there will arise the problem of complicating the management of pictures correspondingly. Further, the quantity of data on the network linking the host and these video image displaying apparatuses would increase and consequently, in which a network is to be configured by utilizing, for instance, long distance data lines which are public lines, the line charge would also increase.

The present invention has been attempted in view of the foregoing problems, and is intended to propose, regarding a video image displaying apparatus for providing occupants of a mobile object with pictures by blinking still pictures, a video image displaying apparatus, video image displaying method, video image distributing apparatus and video image distributing method capable of easily distributing pictures to individual video image displaying apparatuses in which pictures at video image displaying apparatuses are to be centrally managed and updated.

In order to solve these problems, the present invention, as applied to a video image displaying apparatus or a video image displaying method, a plurality of terminal displaying means, arranged at prescribed intervals along the course of a mobile object, for blinking respectively corresponding still pictures, are supplied with picture data of still pictures, with the format of the picture data supplied from a prescribed video image distribution apparatus being converted to a format corresponding to the terminal displaying means.

Or as applied to a video image distributing apparatus or a video image distributing method, in which a plurality of video image displaying apparatuses for providing, by blinking still pictures at prescribed intervals along the course of a mobile object, consecutive articulated images using the still pictures to occupants of the mobile object are to be connected, picture data of the still pictures are distributed in a common format to the plurality of video image displaying apparatuses.

If a plurality of terminal displaying means for blinking respectively corresponding said still pictures are supplied with picture data, with the format of picture data being converted to a format corresponding to the terminal displaying means, in which picture data of, for example, a constant level of resolution are distributed, these picture data can be supplied at a resolution level corresponding to the displaying by the terminal displaying means. Therefore, in which these pictures are to be centrally managed and updated, the pictures can be easily distributed to the video image displaying apparatuses correspondingly to the proportion of pictures at the constant level of resolution.

Further, if picture data are distributed in a fixed format to a plurality of video image displaying apparatuses providing occupants of a mobile object with consecutive articulated images using still pictures, the pictures can be easily distributed to the video image displaying apparatuses in which these pictures are to be centrally managed and updated.

The invention will be further described by way of example with reference to the accompanying drawings, in which:-

Fig. 1 is a block diagram illustrating the host apparatus of an in-tunnel system pertaining to the mode of carrying out the present invention.

Fig. 2 is a block diagram illustrating a video image distributing system to which an in-tunnel system using the host apparatus of Fig. 1 is applied.

Fig. 3 is a block diagram illustrating an in-tunnel system using the host apparatus of Fig. 1.

Fig. 4 is a schematic line diagram for describing the operation of the in-tunnel system of Fig. 3.

The mode of carrying out the present invention will be described in detail below, referring to drawings as appropriate.

### (1) Overall configuration of the system

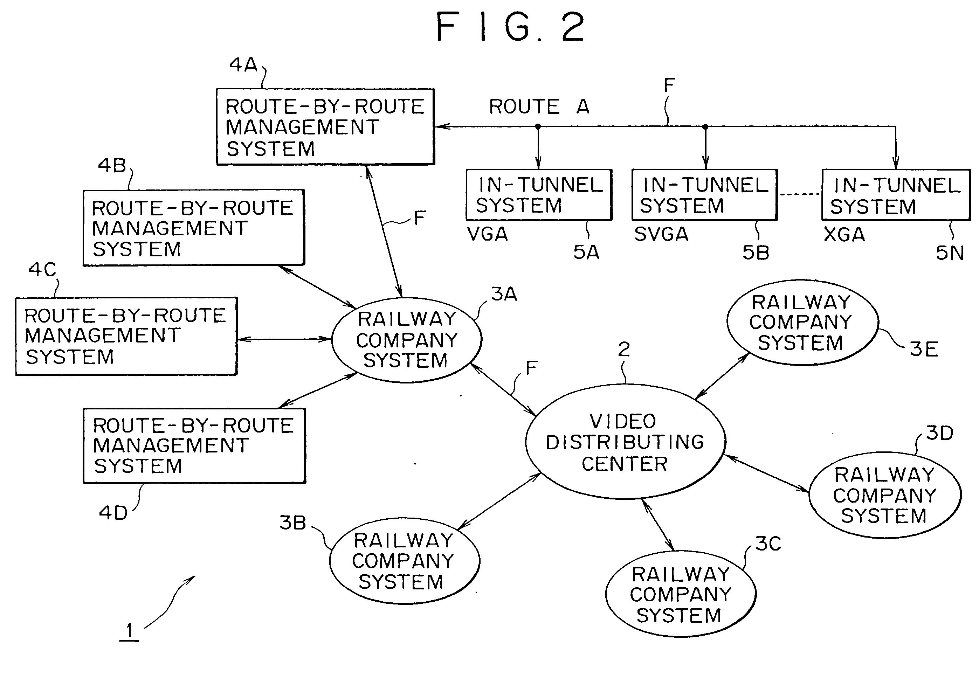

Fig. 2 is a schematic line drawing illustrating a video image distributing system pertaining to a mode of carrying out the invention. In this video image distributing system 1, a picture data distributing system 2 is a server for recording pictures in animation, and stores and maintains animated pictures to be displayed by an in-tunnel system, which is a video image displaying apparatus connected to this network. The picture data distributing system 2 data-compresses picture data of each picture in the format of MPEG (Moving Picture Experts Group) 2 and maintains them in a file form, and delivers, at the request of management systems arranged in different railway companies (hereinafter called railway company systems) 3A to 3E, these maintained files to the railway company systems 3A to 3E over public communication lines for instance. In this video image distributing system 1, it is thereby disposed to manage and distribute the data of animated pictures to be displayed in different in-tunnel systems in a common format.

The railway company systems 3A to 3E are servers for maintaining a file F transferred in such a way, and store and maintain, for the in-tunnel systems managed by the respective railway companies, the animation file F to be displayed by these in-tunnel systems. Further, the railway company systems 3A to 3E transmit the file F of this animation file they maintain to route-by-route management systems 4A to 4D in accordance with a prescribed schedule. It is thereby made possible to manage and distribute the data animation to be displayed by individual in-tunnel systems in a common format in the railway company systems 3A to 3E as well.

The schedule here is to manage, for each of the routes managed by the railway companies, pictures to be displayed by the in-tunnel systems 5A to 5N arranged for different routes. The railway company systems 3A to 3E, in accordance with this schedule, transmit to corresponding route-by-route management systems 4A to 4D the animation file F to be displayed by the different in-tunnel systems 5A to 5N, for instance, together with that schedule.

The route-by-route management systems 4A to 4D are servers maintaining the animation file F and the schedule transmitted from the railway company systems 3A to 3E in this way and arranged on the individual routes managed by the railway companies, and maintaining these animation file F and the schedule for the respective routes. Further, the route-by-route management systems 4A to 4D deliver the animation file F and the schedule thereby maintained to the corresponding in-tunnel systems 5A to 5N. This enables the data of animation for displaying by each in-tunnel system in the common format to be managed and distributed by the route-by-route management systems 4A to 4D as well.

### (2) In-tunnel systems

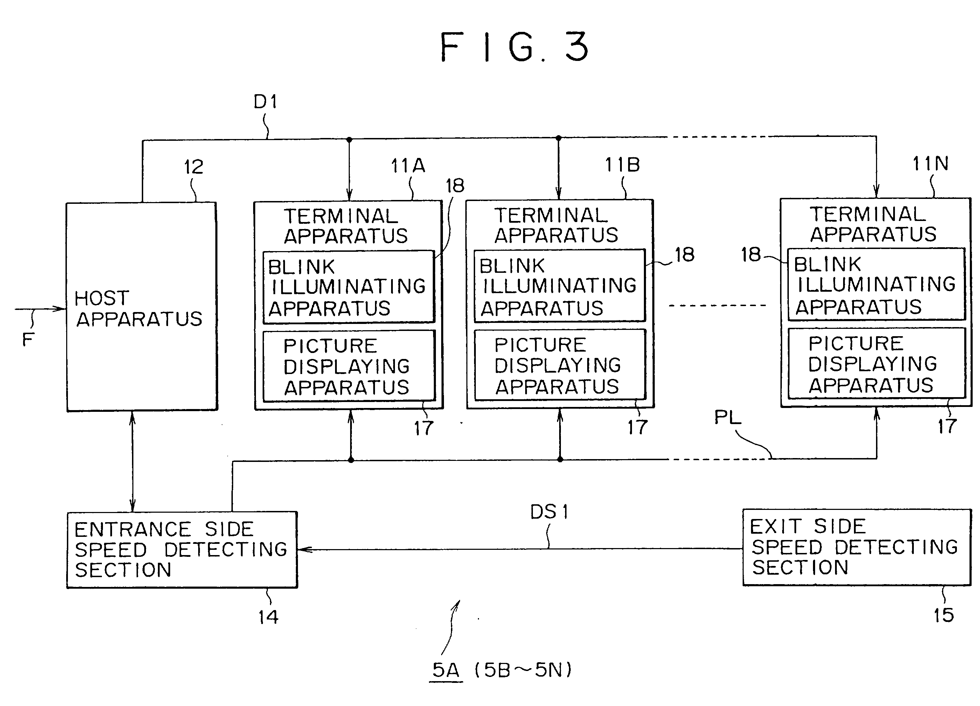

Fig. 3 is a block diagram illustrating the in-tunnel systems 5A to 5N. Since the in-tunnel systems 5A to 5N here, as shown in Fig. 3, are similarly configured except that they differ in the resolution level of the liquid crystal display panel and in structural aspects corresponding to this resolution level, only the in-tunnel system 5A will be described here, and the description of other in-tunnel systems will be dispensed with. Incidentally, in this mode of implementation, in each of the in-tunnel systems 5A, 5B and 5N, still pictures are blinked in a constant level of resolution, and these resolution levels in the in-tunnel systems 5A, 5B and 5N are set to the resolution levels of VGA, SVGA and XGA, respectively.

The in-tunnel system 5A provides consecutive articulated images using still pictures to occupants of a vehicle by blinking the still pictures at prescribed intervals along the course of the vehicle. The in-tunnel systems 5A display the still pictures constituting individual frames of animation with 90 terminal apparatuses 11A to 11N, and these terminals 11A to 11N are arranged at prescribed intervals in the tunnel. Incidentally, in this mode of implementation, the in-tunnel system 5A, it is so disposed that animation is provided for about three seconds by the still pictures formed by these 90 terminal apparatuses 11A to 11N.

Further in the in-tunnel system 5A, on the side from which the vehicle approaches (hereinafter called the entrance side), an entrance side speed detecting section 14 is arranged at a prescribed distance toward the entrance side of the vehicle from the terminal apparatus 11A arranged at the end of the entrance and, conversely on the side from which the vehicle goes away (hereinafter called the exit side), an exit side speed detecting section 15 is arranged at a prescribed distance toward the exit side of the vehicle from the terminal apparatus 11N arranged at the end of the exit side.

Here, the entrance side speed detecting section 14 and the exit side speed detecting section 15 are so arranged that, when a train passes, the first car passes in front of the exit side speed detecting section 15 before the final car passes in front of the entrance side speed detecting section 14, the distance between the entrance side speed detecting section 14 and the exit side speed detecting section 15 be shorter than any train passing this tunnel. This in-tunnel system 5A is thereby enabled to continuously detect the train speed when detecting the train speed with the entrance side speed detecting section 14 and the exit side speed detecting section 15.

For the exit side speed detecting section 15, two television camera-based exit speed detecting sensors are arranged close to the railway track. The exit side speed detecting section 15 detects the passage of the train, and further the passing speed of the train, with reference to a car window, for instance, by comparatively processing the images picked up by these two television cameras with a prescribed signal processing circuit. The exit side speed detecting section 15 outputs this result of detection to the entrance side speed detecting section 14 as speed detection data DSI.

For the entrance side speed detecting section 14, similarly, two television camera-based entrance speed detecting sensors are arranged close to the railway track. The entrance side speed detecting section 14 detects the passage of the train, and further the passing speed of the train by comparatively processing the images picked up by these two television cameras with a prescribed signal processing circuit.

Further the entrance side speed detecting section 14, during the period in which the train is passing in front of the terminal apparatuses 11A to 11N, outputs to the terminal apparatuses 11A to 11N a light emission pulse P, whose signal level intermittently rises in periods corresponding to the passing speed of this train as determined from this entrance side passing speed and the exit side passing speed obtained from the speed detection data DSI.

Each of the terminal apparatuses 11A to 11N consists of a picture displaying apparatus 17 for displaying still pictures transmitted from a host apparatus 12, and a blink illuminating apparatus 18 for illuminating this picture displaying apparatus 17 to make pictures on the picture displaying apparatus 17 visible. The terminal apparatuses 11A to 11N are so disposed that the picture displaying apparatus 17 and the blink illuminating apparatus 18 be arranged substantially at the height of the windows of the train, so that the still pictures on the picture displaying apparatus 17 made visible by this illumination by the blink illuminating apparatus 18 can be readily watched by the occupants of the train.

Of these items, the picture displaying apparatus 17 comprises, in each of the in-tunnel systems 5A to 5N, a transmissive type liquid crystal display panel having a certain level of resolution of its own, a display circuit driving this liquid crystal display panel, and an interface for inputting picture data D1. The picture displaying apparatus 17, according to the picture data D1 in a bit map form matching the resolution level of each liquid crystal display panel, inputs from the host apparatus 12 to the terminals 11A to 11N respectively allocated still pictures.

The blink illuminating apparatus 18, which is a backlight apparatus arranged behind the liquid crystal display panels in the picture displaying apparatus 17, supplies the liquid crystal display panels with illuminating light. In this supplying of illuminating light, the blink illuminating apparatus 18, by operating in synchronism with the light emission pulse PL, intermittently supplies the illuminating light to the liquid crystal display panels in periods matching the passing speed of the train while the train passes in front of the terminal apparatuses 11A to 11N, and thereby blinks still pictures on the liquid crystal display panels.

It is thereby arranged in the in-tunnel system 5A so that the occupants of the train passing in front of the terminals 11A to 11N are provided with consecutive articulated images using still pictures through the windows. Furthermore, by blinking these still pictures in periods matching the passing speed of the train, images deriving from these still pictures look still to the occupants of the train.

The host apparatus 12 maintains the file F and the schedule of the animation transmitted from the route-by-route management system 4A arranged within the nearest station of the terminals 11A to 11N. The host apparatus 12 further processes the file F of the animation according to this schedule it maintains, and transmits the picture data of each frame constituting the animation sequentially to the respectively corresponding terminals 11A to 11N. The host apparatus 12 thereby supplies each of the terminal apparatuses 11A to 11N with the picture data D1 of the still pictures to be displayed at the terminal apparatuses 11A to 11N.

In this process, the host apparatus 12 outputs the picture data of the still pictures in bit map forms matching the levels of resolution of the terminal apparatuses 11A to 11N. The host apparatus 12 thereby generates the picture data of the still pictures matching the levels of resolution of different in-tunnel systems from the data of animation transmitted in a common format, and transmits the picture data of these still pictures.

### (3) Detailed configuration of the host apparatus

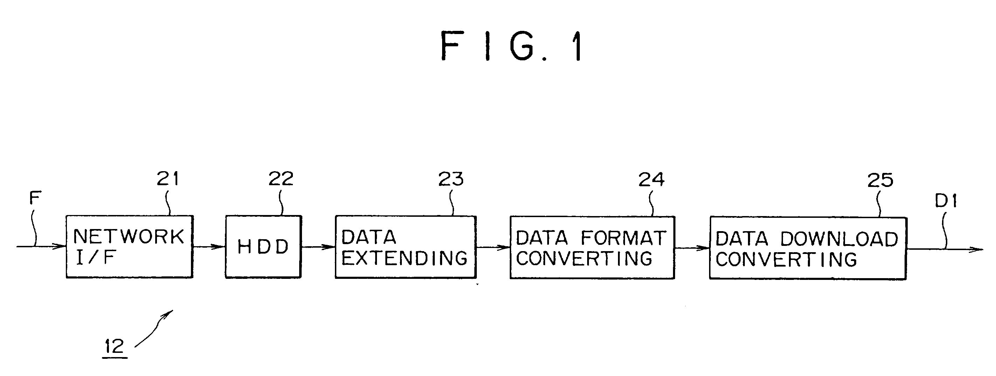

Fig. 1 is a block diagram illustrating the configuration of this host apparatus 12. In this host apparatus 12, a network interface (I/F) 21 inputs the file F and the schedule of animation transmitted from the route-by-route management system 4A.

A hard disk drive (HDD) 22 records the file F and schedule of animation inputted via this network interface 21. Also, the hard disk drive 22, under schedule management by a system controller (not shown ) in accordance with the schedule transmitted in this manner, reproduces and outputs the file F designated by this system controller in, for instance, one hour periods.

A data extension circuit 23 data-extends and outputs the picture data of animation from this file F by the data. The data extension circuit 23 thereby outputs picture data of brightness signals and color difference signals corresponding to the MPEG format.

A data format converting circuit 24 generates, by subjecting picture data outputted from this data extending circuit 23 to interpolating operation and thinning, picture data matching the levels of resolution of different in-tunnel systems out of the data of animation transmitted from a video image distributing system 1 in a common format. Further, the data format converting circuit 24 converts the picture resulting from such conversion of resolution level into picture data of red, blue and green corresponding to the driving of liquid crystal display panels by subjecting them to matrix operation, and outputs them in a sequence matching the pixel array of the liquid crystal display panes. The data format converting circuit 24 further outputs the picture data thereby generated, consisting of successive frames, on a frame-by-frame basis. The data format converting circuit 24 thereby outputs the picture data of animation transmitted in a file form in the MPEG 2 format, as converted into picture data D1 of still pictures in bit map forms matching the levels of resolution of the liquid crystal display panels in this in-tunnel system.

A data download converting circuit 25 receives the picture data D1 of still pictures on this frame-by-frame basis, and successively sends out these picture data D1 to the terminal apparatuses 11A to 11N.

### (5) Operation in this mode of implementation

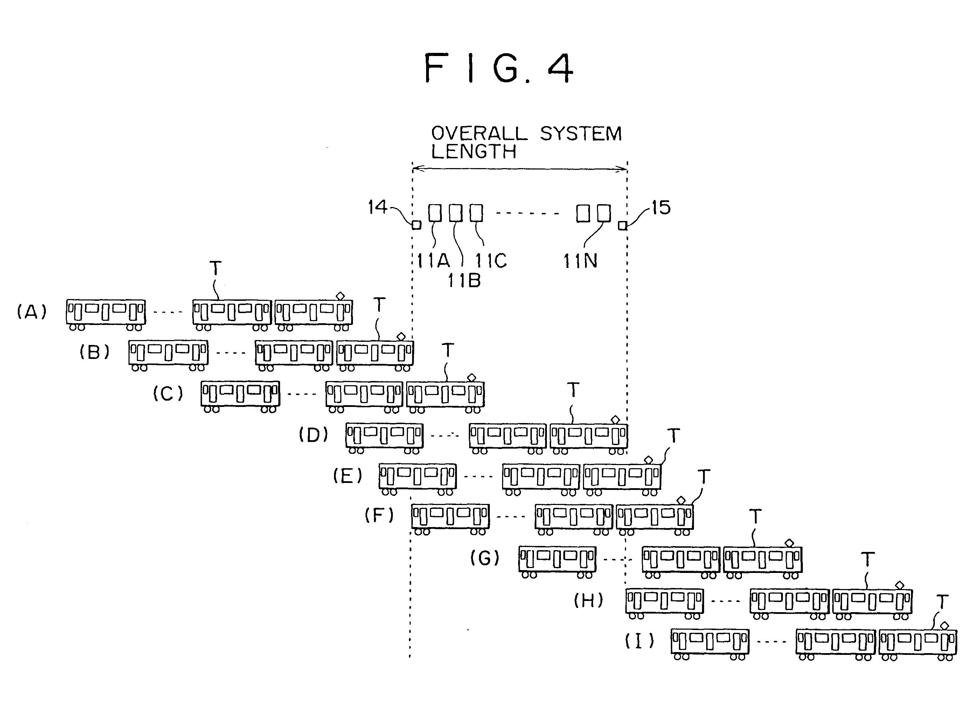

In the foregoing configuration, each of the in-tunnel systems 5A to 5N (Fig. 3 and Fig. 4), as illustrated in Fig. 4, when a train T approaches and the first car passes in front of the entrance side speed detecting section 14 (Fig. 4(B)), the passage of the train T is detected here, and the detection of the passing speed is started. Further, as the train T runs on and its first car passes in front of the exit side speed detecting section 15 (Fig. 4(D)), the passage and the passing speed of this train T are detected by the exit side speed detecting section 15.

As the train T further runs and its final car passes in frontof the entrance side speed detecting section 14 (Fig. 4 (F)), the passage of this train T is detected by the entrance side speed detecting section 14, and the detection of its passing speed is completed. After that, as this final car passes in front of the exit side speed detecting section 15 (Fig. 4(H)), the passage of this train T is detected by the exit side speed detecting section 15, too, and the detection of the passing speed is completed.

In the in-tunnel systems 5A to 5N, after the passage of the first car of the train is detected by the entrance side speed detecting section 14, until the final car passes the exit side speed detecting section 15, the light emitting pulse PL which causes the signal level to rise according to the passing speed, and the blink illuminating apparatus 18 intermittently supplies, with reference to this light emitting pulse PL, illuminating light to the picture displaying apparatus 17 using liquid crystal display panels to enable the terminal apparatuses 11A to 11N, arranged at prescribed intervals in the tunnel, to blink still pictures according to the moving speed of the train.

In the in-tunnel systems 5A to 5N, the terminals 11A to 11N thereby provide consecutive articulated images using still pictures to the occupants of the train.

In the video image distributing system 1 for providing video images to such in-tunnel systems 5A to 5N (Fig. 2), the file F of animation maintained at a video image distributing center 2, after being distributed upon request from the railway company systems 3A to 3E to these railway company systems 3A to 3E, is provided to the in-tunnel systems 5A to 5N via the route-by-route management systems 4A to 4D managing the routes of the individual railway companies.

This file F in this process is managed in the common format by this video image distributing system 1 and distributed, the management and distribution of animation can be thereby simplified and, moreover, the quantity of data needed for distribution can be reduced.

Further this file F is data-compressed in the MPEG 2 format and maintained by the video image distributing center 2 and transmitted to the in-tunnel systems 5A to 5N, which thereby further reduces the quantity of data needed for distribution correspondingly.

In the in-tunnel systems 5A to 5N (Fig. 1), the file F thereby transmitted is temporarily maintained by the hard disk drive 22 and, when a prescribed length of time has elapsed, read out of the hard disk drive 22 to be inputted to the data extending circuit 23, in which it is data-extended to be converted into picture data of brightness signals and color difference signals. The ensuing interpolating operation and thinning by the data format converting circuit 24 result in conversion to the levels of resolution matching those of the liquid crystal display panels in the terminal apparatuses 11A to 11N, and further conversion to picture data D1 of color signals in a suitable array for driving the liquid crystal display panels.

It is thereby made possible, even where the level of resolution of the liquid crystal display panel differs among the in-tunnel systems 5A to 5N, to centrally manage and distribute in a common format the animation provided by the in-tunnel systems 5A to 5N. Accordingly, any expansion of the network that may be required can be easily accomplished.

Thus in the in-tunnel systems 5A to 5N, picture data D1 involving differences in resolution level can be transmitted to the terminal apparatus 11A to 11 N frame by frame in bit map forms, and the video images to be provided to the occupants of vehicles are thereby updated.

### (6) Advantages of this mode of implementation

The foregoing configuration enables a video image displaying apparatus, which is an in-tunnel system for providing occupants of a moving object with consecutive articulated still pictures by blinking still pictures, to centrally manage and update these pictures of animation in a common format by converting the format of inputted picture data and supplying them to video image displaying means, which are terminal apparatuses. These pictures of animation can be thereby easily distributed to video image displaying apparatuses.

Also, video images can be centrally managed and updated with ease by converting not only the format but also the resolution level in this process where the resolution level differs among the video image displaying apparatus 5A to 5N.

Further by converting, in this process, picture data into a file of still pictures after transmitting them in the animation form, it is made possible, when supplying video images to this video image distributing system, to provide the video images by common processing to the processing of video images via, for instance, television broadcasting, and to improve the handling ease of video image distributing systems of this kind correspondingly.

Also, by distributing data-compressed video images in this process, it is made possible to manage and distribute the video images in a correspondingly smaller data quantity, and this also contributes to simplifying the management and distribution of video images.

### (7) Other modes of implementation

Incidentally, while the above-described mode of implementation was an instance in which animation is data-compressed in the MPEG format for distribution, the present invention is not limited to this, but the same advantages can be achieved by transmitting animation data-compressed by various other techniques.

Also, while the above-described mode of implementation was a case in which picture data of still pictures are generated by individual in-tunnel systems after picture data of animation in a file form are transmitted to the in-tunnel systems, the invention is not limited to this, but the picture data of still pictures can be stored in servers after data-compressing them in, for example the JPEG (Joint Photographic Coding Experts Group) format, and distributing the data in this form.

Also, while the above-described mode of implementation was an example in which picture data of brightness signals and color difference signals are distributed by transmitting animation data-compressed in the MPEG format, the invention is not limited to this, but the picture data can as well be distributed in the form of color signals, and they can also be distributed in a data-compressed state.

Also, while the above-described mode of implementation was an instance in which still pictures are displayed at a constant level of resolution in each of the in-tunnel systems, the invention is not limited to this, but still pictures differing in resolution level may as well be displayed in each in-tunnel system where the video images can be displayed reasonably free from awkward impressions for any practical purpose. To add, the specific requirement of this case can be met by switching the processing for resolution level conversion by the data format converting circuit 24, or by arranging another data format converting circuit to match this terminal apparatus differing in resolution level.

Further, while the above-described mode of implementation was a case in which the resolution level of picture data is converted by the host apparatus of the in-tunnel system, the invention is not limited to this, but the resolution level may as well be converted on the side of individual terminal apparatuses.

Also, while the above-described mode of implementation was an example in which transmissive type liquid crystal display panels are arranged at the height of train windows and still pictures are blinked thereon, the invention is not limited to this, but various other displaying techniques can be extensively applied including, for instance, blinking of still pictures which are projected on the wall surface or the like of the tunnel from liquid crystal display panels, and blinking of still pictures with an array of diodes.

Also, while the above-described mode of implementation was an instance in which the in-tunnel systems are configured so that the distance between the terminal apparatuses and the entrance side end and the exit side end be shorter than the length of the train, the invention is not limited to this, but, conversely, the distance between the terminal apparatuses and the entrance side end and the exit side end be longer than the length of the train.

Further, while the above-described mode of implementation was a case in which still pictures are blinked according to the train speed in such a manner that the video images of still pictures look still to the occupants of the train, the invention is not limited to this, but it can be extensively applied where, for instance, the video images of still pictures look slowly moving to the occupants.

Also, while the above-described mode of implementation was an instance in which the video images of animation are displayed by the blinking of still pictures, the invention is not limited to this, but still pictures including signs and advertisements can be displayed so as to be recognizable by the occupants and the driver by blinking the same still picture.

Further, while the above-described mode of implementation was an example in which consecutive articulated still pictures are provided to the occupants of a train by blinking still pictures in a tunnel, the invention is not limited to this, but it can be extensively applied to cases of providing consecutive articulated still pictures to the occupants of mobile objects including a case in which consecutive articulated still pictures are provided to the occupants of motor vehicles in a highway tunnel, another in which consecutive articulated still pictures are provided beside a highway or a railway at night, and still another in which consecutive articulated still pictures are provided to the passengers of vehicles in an amusement park.

As hitherto described, according to the present invention, regarding video image displaying apparatuses for providing video images to the occupants of a mobile object by blinking still pictures, these video images can be easily distributed to individual video image displaying apparatuses by converting the format of inputted picture data and supplying them to picture displaying means at individual terminals, where video images from these picture displaying apparatuses are to be centrally managed and updated.

## Claims

1. A video image displaying apparatus for providing, by blinking still pictures at prescribed intervals along the course of a mobile object, consecutive articulated images using said still pictures to occupants of said mobile object, comprising:
a plurality of terminal displaying means, arranged at prescribed intervals along the course of said mobile object, for blinking respectively corresponding said still pictures; and
picture data supply means for converting the format of picture data supplied from a prescribed video image distribution apparatus to a format corresponding to said terminal displaying means and supplying said terminal displaying means with the picture data of said still pictures.

2. A video image displaying apparatus as claimed in Claim 1, wherein:
said picture data supply means converts the format of said picture data by converting the resolution level of said picture data supplied from said video image distribution apparatus into the resolution level of said terminal displaying means.

3. A video image displaying apparatus as claimed in Claim 2, said terminal displaying means comprising:
a liquid crystal display panel for forming said still pictures; and
illuminating light supplying means for intermittently supplying illuminating light to said liquid crystal display panel,
wherein the resolution level of said terminal displaying means is the resolution level of said liquid crystal display panel.

4. A video image displaying apparatus as claimed in Claim 1, 2 or 3, wherein:
said picture data supplied from said video image distribution apparatus are data-compressed picture data, and
said picture data supply means has a data extending means for data-extending said data-compressed picture data.

5. A video image displaying method for providing, by blinking still pictures at prescribed intervals along the course of a mobile object, consecutive articulated images using said still pictures to occupants of said mobile object, wherein:
to a plurality of terminal displaying means, arranged at prescribed intervals along the course of said mobile object, for blinking respectively corresponding said still pictures,
picture data are supplied, with the format of picture data supplied from a prescribed video image distribution apparatus being converted to a format corresponding to said terminal displaying means.

6. A video image displaying method, as claimed in Claim 5, 6 or 7, wherein:
the format of said picture data is converted by converting the resolution level of picture data supplied from said video image distribution apparatus into the resolution level of said terminal displaying means.

7. A video image displaying method as claimed in Claim 6, said terminal displaying means comprising:
a liquid crystal display panel for forming said still pictures; and
illuminating light supplying means for intermittently supplying illuminating light to said liquid crystal display panel,
wherein the resolution level of said terminal displaying means is the resolution level of said liquid crystal display panel.

8. A video image displaying method as claimed in Claim 5, wherein said picture data supplied from said video image distribution apparatus are data-compressed picture data, and
the resolution level is converted after the data-compressed picture data are data-extended.

9. A video image distributing apparatus to which are connected a plurality of video image displaying apparatuses for providing, by blinking still pictures at prescribed intervals along the course of a mobile object, consecutive articulated images using said still pictures to occupants of said mobile object, wherein:
picture data of said still pictures are distributed in a common format to said plurality of video image displaying apparatuses.

10. A video image distribution apparatus, as claimed in Claim 9, wherein:
the picture data of said still pictures in said common format are picture data of a constant level of resolution.

11. A video image distributing apparatus as claimed in Claim 9, wherein the picture data of said still pictures are data-compressed and distributed.

12. A video image distributing method wherein:
where a plurality of video image displaying apparatuses for providing, by blinking still pictures at prescribed intervals along the course of a mobile object, consecutive articulated images using said still pictures to occupants of said mobile object are connected, and
picture data of said still pictures are distributed in a common format to said plurality of video image displaying apparatuses.

13. A video image distributing method as claimed in Claim 12, wherein the picture data of said still pictures in said common format are picture data of a constant level of resolution.

14. A video image distributing method, as stated in Claim 12, wherein the picture data of said still pictures are data-compressed and distributed.
